Europäisches Patentamt

European Patent Office

Office européen des brevets

(11) Publication number: 0 412 368 B1

# EUROPEAN PATENT SPECIFICATION

(45) Date of publication of patent specification: 16.03.94  (51) Int. Cl.⁵: $H02B\ 11/173$

(21) Application number: 90114386.7

(22) Date of filing: 26.07.90

(54) **Switchboard of breaker accomodation type.**

(30) Priority: **11.08.89 JP 206791/89**

(43) Date of publication of application:
**13.02.91 Bulletin 91/07**

(45) Publication of the grant of the patent:
**16.03.94 Bulletin 94/11**

(84) Designated Contracting States:
**DE FR GB**

(56) References cited:
**FR-A- 2 353 976**
**FR-E- 93 169**

**PATENT ABSTRACTS OF JAPAN vol. 2, no.
102 (E-78) 23 August 1978 ; & JP-A-53 68836
(HITACHI SEISAKUSHO KK) 19 June 1978.**

(73) Proprietor: **HITACHI, LTD.**
**6, Kanda Surugadai 4-chome**
**Chiyoda-ku, Tokyo 100(JP)**

(72) Inventor: **Takematsu, Kotaro, Higashi
Ayukawa Terasu 8A-8
1-2-204 Ayukawacho 5-chome
Hitachi-shi(JP)**
Inventor: **Tanimizu, Toru
27-11 Kujicho 6-chome
Hitachi-shi(JP)**
Inventor: **Yoshikawa, Isao
6-38 Omikacho 6-chome
Hitachi-shi(JP)**

(74) Representative: **Strehl Schübel-Hopf Groening
& Partner
Maximilianstrasse 54
D-80538 München (DE)**

# Description

This invention relates to a switchboard according to the preamble of claim 1 having an improved arrangement of power supply side and load side conductors and associated contact members of a circuit breaker making electrical contact with the respective conductors in a housing and relates also to such a circuit breaker accommodated in the switchboard.

A power receiving/substation equipment is commonly used so as to control electric power supplied to a load, for example, an electrical equipment in a building, a sewerage system or a railway system. A switchboard is usually used as one of major components of the power receiving/substation equipment so as to control electric power supplied from a power source to such a load. Depending on the required function of the load, as many as several to several hundred switchboards are juxtaposed in parallel. When the switchboards amounting to a total number of several hundreds are arranged in parallel (line-up of switchgear), they occupy a considerably large area. In recent years, it has been strongly demanded to reduce the scale of the power receiving/substation equipment.

In an attempt to meet such a demand, JP-A-58-175902 proposes an enclosed switchboard in which electrical components are withdrawably inserted into its housing and arranged so as to be movable in a horizontal plane in a direction substantially orthogonal with respect to the inserted direction. According to the disclosure of the cited application, a partition wall is provided in the housing of the enclosed switchboard so that a circuit breaker compartment is formed on one side, while a conductor compartment extending in the depthwise direction is formed on the other side. Power supply side and load side three-phase disconnecting parts communicating with these breaker and conductor compartments are disposed in three phases above and beneath the partition wall. When the three-phase circuit breaker moves in the housing, the contact members of the circuit breaker make electrical connections with the associated disconnecting parts.

The three-phase disconnecting parts and the breaker contact members are arranged taking into consideration the insulation distance in the switchgear line-up direction, that is, in the widthwise direction of the housing. Therefore, the housing of the switchboard inevitably occupies a large area in the widthwise direction. Also, the housing of the switchboard occupies a large area in the depthwise direction. This is because the disconnecting parts and the breaker contact members extend in the moving direction of the circuit breaker, that is, in the depthwise direction of the housing and also because the conductor compartment, in which power supply buses and load side conductors connectable with the disconnecting parts are disposed, is located to extend in the depthwise direction of the housing. Thus, the entire area occupied by the housing of the switchboard becomes inevitably wide. In addition, an attempt to reduce the size of the housing of the switchboard will lead to the possibility of damaging both the housing and the circuit breaker due to the possibility of collision of the circuit breaker against the housing when the circuit breaker is inserted into the housing.

FR-A-93169 comprises three-phase breaking parts that are arranged in a depthwise direction of a housing, wherein the power supply side contact members and the load side contact members provided at each breaking part are arranged such that the vertical distances between these contact members increase from the first to the last breaking part with respect to the moving direction of the circuit breaker. Therefore, the minimum height of the switchboard is defined by the longest vertical distance between two corresponding contact members.

It is therefore object of the present invention to further reduce the size of the switchboard. This is achieved with the arrangement defined in the characterising part of claim 1.

Thus, the size of the switchboard in vertical direction can be minimized.

The arrangement according to the invention is advantageous in that, at the time of insertion of the circuit breaker into the housing, the contact members of the individual phases can freely pass through the contact gaps without colliding against the power supply side and load side conductors of the individual phases, so that not only undesirable damage to the individual contact members and conductors can be prevented, but also the size of the housing in the widthwise direction can be greatly reduced.

Preferred embodiments of the present invention will now be described in detail in conjunction with the accompanying drawings, in which:

Fig. 1 is a perspective view of an embodiment of the switchboard of breaker accommodation type according to the present invention.

Fig. 2A is a schematic side elevational view of the switchboard before insertion of the circuit breaker when viewed from the direction of the line IIA-IIA in Fig. 1.

Fig. 2B is a schematic plan view of the switchboard before insertion of the circuit breaker when viewed from the direction of the line IIB-IIB in Fig. 1.

Fig. 2C is a schematic plan view of the switchboard after insertion of the circuit breaker when viewed from the direction of the line IIC-IIC in Fig. 1.

Fig. 3 is an enlarged schematic sectional view of one of guide wheel parts of the circuit breaker and one of the side plates of the housing when viewed from the direction of the line III-III in Fig. 2B.

Fig. 4 is an enlarged schematic sectional view of the breaking part of one phase in the circuit breaker.

Fig. 5 is a partly cut-away, perspective view of one of the stationary disconnector covers.

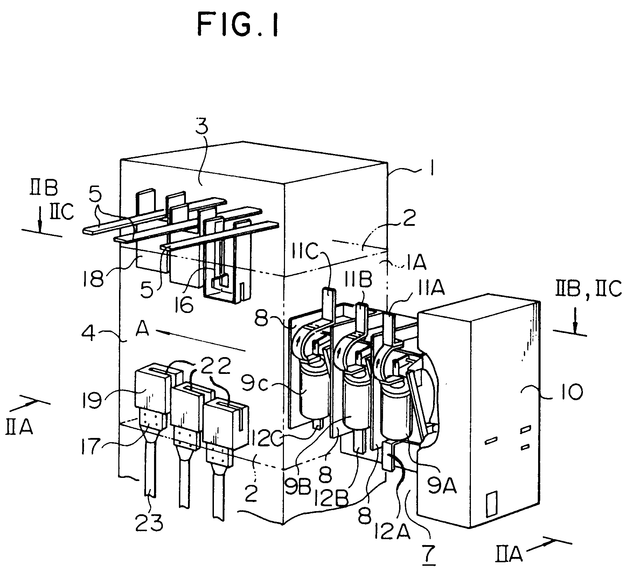

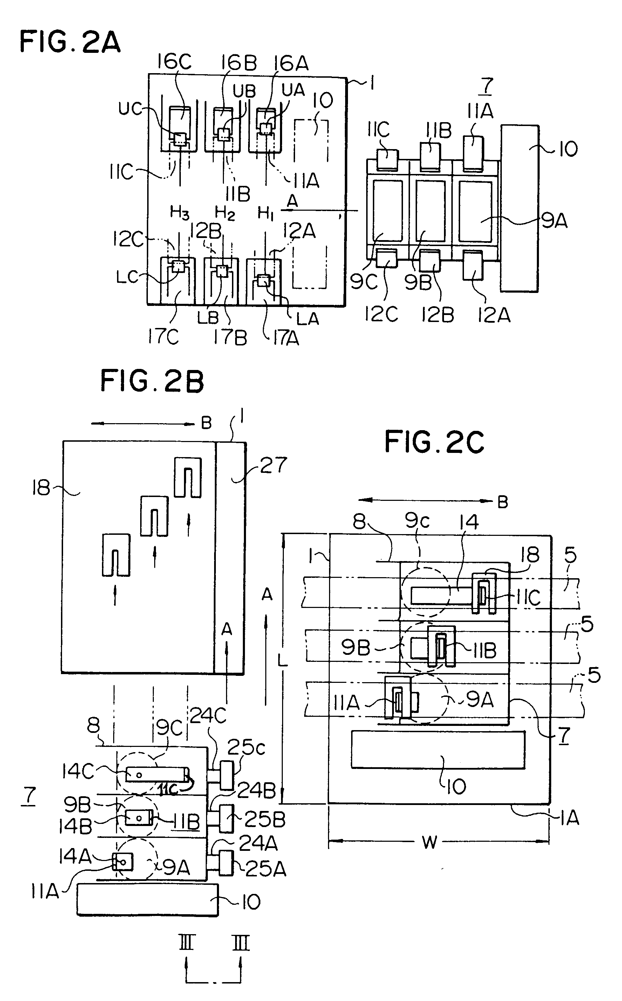

A preferred embodiment of the switchboard according to the present invention will now be described in detail with reference to Figs. 1, 2A, 2B and 2C. Fig. 1 shows that a circuit breaker 7 is being inserted through an insertion opening 1A into a housing 1 of the switchboard. Figs. 2A and 2B show the switchboard before insertion of the circuit breaker 7 into the housing 1, while Fig. 2C shows the switchboard after insertion of the circuit breaker 7 into the housing 1.

The housing 1 of the switchboard is formed of rectangular steel plates. A partition plate 2 is disposed in the housing 1 to form a bus compartment 3 and a breaker compartment 4 in an upper space and a lower space of the housing 1 respectively. Three-phase buses 5 connected to a three-phase power source are disposed in the bus compartment 3. The power supply buses 5 are disposed orthogonally with respect to the inserting direction of the circuit breaker 7 above the breaker compartment 4 and extend in the direction of switchgear line-up. The circuit breaker 7 is disposed in the breaker compartment 4.

In the illustrated embodiment, a vacuum circuit breaker is used as the circuit breaker 7. The circuit breaker 7 carries three-phase breaking parts 9A, 9B, 9C and an actuator 10. The three-phase breaking parts 9A, 9B and 9C are disposed along the depthwise direction of the housing 1 as shown by the arrow A. That is, the three-phase breaking parts 9A, 9B and 9C are arrayed along the moving direction A of the circuit breaker 7. The three-phase breaking parts 9A, 9B and 9C are partitioned from each other by electrical insulating barriers 8.

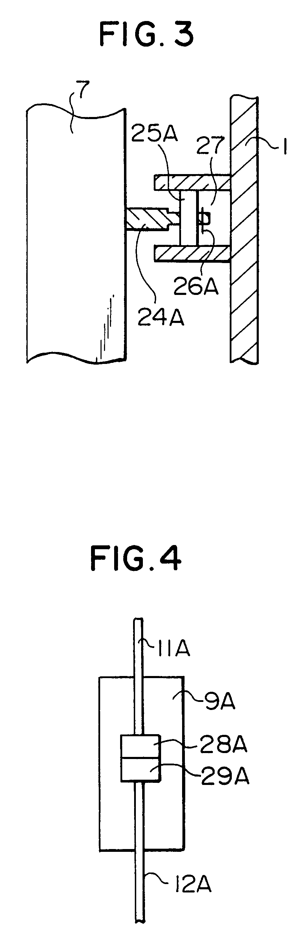

Fig. 3 is a schematic sectional view of one of guide wheel parts of the circuit breaker 7 and one of the side plates of the housing 1 when viewed along the line III-III in Fig. 2B.

Guide wheel parts 25A, 25B and 25C are mounted on shafts 24A, 24B and 24C extending from the positions corresponding to the three-phase breaking parts 9A, 9B and 9C of the circuit breaker 7 respectively, although the guide wheel part 25A and the associated shaft 24A are only shown in Fig. 3. The guide wheel parts 25A, 25B and 25C belonging to the individual phases are mounted on the shafts 24A, 24B and 24C belonging to the individual phases by pins 26A, 26B and 26C respectively so as to move in a guide space 27 while rotating.

Fig. 4 is a schematic sectional view of the A-phase breaking part 9A of the circuit breaker 7.

Referring to Figs. 1 and 4, the actuator 10 actuates a drive shaft (not shown) provided for causing vertical movement of a power supply side contact member 11A of the A-phase breaking part 9A. As a result, a movable contact 28A carried by the contact member 11A and disposed in the A-phase breaking part 9A moves toward or away from an associated stationary contact 29A thereby electrically closing or opening the circuit. The stationary contact 29A is secured to a load side contract member 12A. While the above description has referred to the A-phase breaking part 9A of the circuit breaker 7, it is apparent that the same applies also to the B-phase and C-phase breaking parts 9B and 9C of the circuit breaker 7.

Referring to Fig. 2B, horizontal members 14A, 14B and 14C extend toward the right and left from the three-phase breaking parts 9A, 9B and 9C respectively of the circuit breaker 7. These horizontal members 14A, 14B and 14C are such that their lengths are progressively increased in the depthwise direction A from the insertion opening 1A of the housing 1. That is, the length of the horizontal member 14A is smallest, while that of the horizontal member 14C is largest. The power supply side contact members 11A, 11B, 11C and the load side contact members 12A, 12B, 12C extend upward and downward from the front ends of these horizontal members 14A, 14B, 14C respectively so as to make electrical contact with power supply side conductors 16A, 16B, 16C and load side conductors 17A, 17B, 17C respectively. The power supply side conductors 16A, 16B and 16C are electrically connected to the three-phase power supply buses 5 respectively.

The power supply side contact members 11A, 11B, 11C and the load side contact members 12A, 12B and 12C are dimensioned so that they are progressively distant from the associated breaking parts 9A, 9B, 9C respectively along the depthwise direction A from the breaker insertion opening 1A of the housing 1 as shown in Fig. 2B. That is, as shown in Fig. 2C, the distance between the C-phase power supply side contact member 11C and the C-phase breaking part 9C is larger than that between the B-phase power supply side contact member 11B and the B-phase breaking part 9B, and the A-phase power supply side contact member 11A is located on the other side relative to these power supply side contact members 11B and 11C. It is apparent that the same applies also to the load side contact members 12A, 12B and 12C.

As shown in Fig. 1, power supply side stationary disconnector covers 18 are disposed opposite to load side stationary disconnector covers 19, and these covers 18 and 19 are made of an electrical insulator.

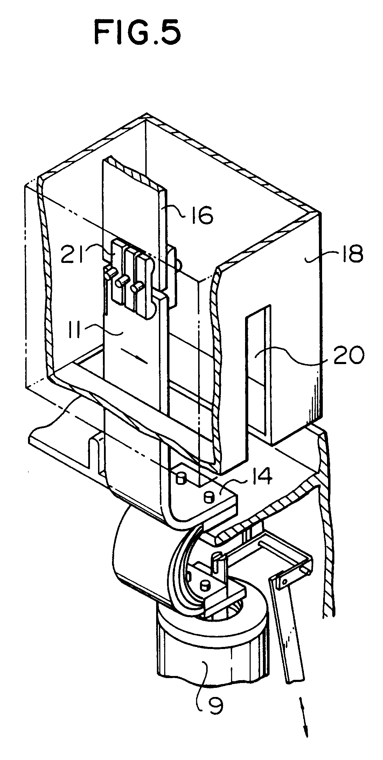

Fig. 5 is an enlarged perspective view of the power supply side stationary disconnector cover 18 of one phase used in the present invention.

Referring to Fig. 5, the power supply side stationary disconnector cover 18 is in the form of a box having an opening at one end and is supported by the partition plate 3 or a ceiling panel. A power supply side contact slot 20 is formed to extend through part of one of the walls of the power supply side stationary disconnector cover 18 and part of the floor adjacent to the associated breaking part 9 to provide a contact member insertion opening. One of the power supply side contact members 11A, 11B and 11C received in the power supply side contact slot 20 makes electrical contact through contact strips 21 with the corresponding one of the power supply side conductors 16A, 16B and 16C. Each of these power supply side conductors 16A, 16B and 16C is disposed in the corresponding power supply side stationary disconnector cover 18 and is connected at the other end to the corresponding power supply bus 5.

Referring to Fig. 1, each of the load side stationary disconnector covers 19 is formed with a load side contact slot 22 which provides both a load side contact member insertion opening and an opening communicating with the associated breaking part 9. One of the load side conductors 17A, 17B and 17C is disposed in the load side contact slot 22. A load side cable 23 extends to the exterior from one end of the load side conductor 17A, 17B or 17C disposed in the load side contact slot 22. One of the load side contact members 12A, 12B and 12C is inserted into the load side contact slot 22 to be brought into electrical contact with the corresponding one of the load side conductors 17A, 17B and 17C. In order that the operator may not touch the electrical contact part between the load side contact member 12 and the load side conductor 17, the load side stationary disconnector cover 19 encloses the contact part thereby ensuring the safety of the operator.

The power supply side conductors 16A, 16B, 16C and the load side conductors 17A, 17B, 17C are arranged so that the spacings $H_1$, $H_2$ and $H_3$ between them are successively decreased along the depthwise direction A from the insertion opening 1A of the housing 1. That is, there is the following relation in Fig. 2A:

$$H_1 > H_2 > H_3 \quad (1)$$

Thus, because of the relation given by the expression (1), the contact members, for example, the power supply side and load side contact members 11C and 12C can be reliably brought into electrical contact with the power supply side and load side conductors 16C and 17C respectively without colliding against the power supply side and load side conductors 16A, 17A and the power supply side and load side conductors 16B, 17B respectively at the time of insertion of the circuit breaker 7 into the housing 1 of the switchboard. Therefore, undesirable damage to the power supply side and load side contact members 11A, 11B, 11C, 12A, 12B, 12C and the power supply side and load side conductors 16A, 16B, 16C, 17A, 17B, 17C can be prevented.

Further, according to the present invention, the three-phase breaking parts 9A, 9B and 9C of the circuit breaker 7 are arrayed in the moving direction A of the circuit breaker 7, that is, in the depthwise direction A of the housing 1 so as to reduce the dimension of the housing 1 in the lateral direction shown by the arrow B. Also, the positions of electrical contact between the power supply side and load side contact members 11A, 11B, 11C, 12A, 12B, 12C and the power supply side and load side conductors 16A, 16B, 16C, 17A, 17B, 17C respectively are located in the direction B lateral with respect to the moving direction A of the circuit breaker 7 so as to reduce the dimension of the depth of the housing 1 of the switchboard. Thus, the overall size of the switchboard can be made small.

Further, the illustrated embodiment can achieve the operation and effects which will be described now.

In the illustrated embodiment, the positions UA, UB and UC of an electrical contact between the power supply side contact members 11A, 11B, 11C and the respective power supply side conductors 16A, 16B, 16C are displaced relative to one another so that they may not overlap. Also, the positions LA, LB and LC of the electrical contact between the load side contact members 12A, 12B, 12C and the respective load side conductors 17A, 17B, 17C are similarly displaced relative to one another so that they may not overlap. As a result, the state of the electrical contact at these contacting positions UA, UB, UC, LA, LB and LC can be observed from the insertion opening 1A of the housing 1, so that detection of a malcontact, if any, as well as maintenance and inspection can be facilitated.

Further, as shown in Fig. 2C, the position of the electrical contact between the A-phase power supply side contact member 11A and the power supply side conductor 16A and that between the A-phase load side contact member 12A and the load side conductor 17A are located on the left-hand side or forward relative to those located on the rear side. For example, the positions of the electrical contact between the A-phase power supply side and load side contact members 11A, 12A and the respective power supply side and load side conductors 16A, 17A are located forward relative to the intermediate positions of the electrical contact between the B-phase power supply side and load side contact members 11B, 12B and the respective power supply side and load side conductors 16B, 17B. Thus, the intermediate contacting positions are not opposite to the forward contacting positions, and the insertion of both the B-phase power supply side and load side contact members 11B and 12B is not encountered with any obstacle. Therefore, the work for assembling the B-phase power supply side contact member 11B with the power supply side conductor 16B as well as the work for assembling the load side contact member 12B with the load side conductor 17B can be facilitated. The same applies also to both the work for assembling the C-phase power supply side contact member 11C with the power supply side conductor 16C and the work for assembling the load side contact member 12C with the load side conductor 17C.

In the illustrated embodiment, the three-phase power supply buses 5 are disposed in the bus compartment 3 formed in the housing 1. Therefore, the three-phase buses 5 can be easily inserted into and withdrawn from the bus compartment 3 through the insertion opening 1A, and maintenance and inspection of the buses 5 can be facilitated.

On the other hand, the power supply side conductors 16A, 16B, 16C and the load side conductors 17A, 17B, 17C are covered by the stationary disconnector covers 19, so that the operator working outside may not touch those conductors. Therefore, the operator can safely work with a sense of security.

In the case of the prior art circuit breaker, its three-phase breaking parts are arranged in the direction lateral with respect to the moving direction of the circuit breaker, and, as a result, its width W becomes inevitably large. In the case of the circuit breaker 7 used in the switchboard of the present invention and shown in Fig. 1, its three-phase breaking parts 9A, 9B and 9C are arrayed in the moving direction A of the circuit breaker 7, so that its width W can be greatly reduced.

It will be understood from the foregoing description of the switchboard of breaker accommodation type according to the present invention that the overall size of the switchboard can be made small, and undesirable damage to the switchboard and its circuit breaker can be reliably prevented.

## Claims

1. A switchboard of breaker accommodation type comprising a housing (1) having plural-phase power supply side conductors (16A, 16B, 16C) and load side conductors (17A, 17B, 17C) disposed thereinside, a circuit breaker (7) inserted through an insertion opening (1A) to be accommodated in said housing, plural-phase breaking parts (9A, 9B, 9C) provided in said circuit breaker, power supply side contact members (11A, 11B, 11C) provided on said breaking parts (9A, 9B, 9C) to be electrically connected to said power supply side conductors (16A, 16B, 16C) respectively, and load side contact members (12A, 12B, 12C) provided on said breaking parts (9A, 9B, 9C) to be electrically connected to said load side conductors (17A, 17B, 17C) respectively, wherein said plural-phase breaking parts (9A, 9B, 9C) are arrayed in the depthwise direction (A) of said housing (1), characterized in that the positions (UA, UB, UC) where said power supply side contact members (11A, 11B, 11C) are brought into electrical contact with the corresponding power supply side conductors (16A, 16B, 16C), and the positions (LA, LB, LC) where said load side contact members (12A, 12B, 12C) are brought into electrical contact with the corresponding load side conductors (17A, 17B, 17C) are arranged in a relatively displaced relation in a direction (B) lateral with respect to the arrayed direction (A) of said plural-phase breaking parts (9A, 9B, 9C), and lateral with respect to the longitudinal direction of said plural-phase breaking parts (9A, 9B, 9C).

2. The switchboard according to Claim 1, characterized in that the lengths of members (14) providing the plural sets of said contacting positions located in the direction (B) lateral with respect to the arrayed direction (A) of said plural-phase breaking parts (9A, 9B, 9C) are progressively increased from the insertion opening (1A) of said housing (1) in the depthwise direction (A) of said housing (1).

3. The switchboard according to Claim 1, characterized in that said power supply side contact member (11A) of one phase brought into electrical contact with said power supply side conductor (16A) of the same phase at one of the plural sets of said contacting positions located in the direction (B) lateral with respect to the arrayed direction of said plural-phase breaking parts (9A, 9B, 9C) is disposed on the other side of said power supply side contact members (11B, 11C) of the other phases.

**4.** The switchboard according to claim 1, characterized in that the spacings between the contacting positions of said power supply side contact members (11) and said load side contact members (12) are selected to be progressively narrowed ($H_1 > H_2 > H_3$) from said breaking part (9A) disposed on the front side toward said breaking part (9C) disposed on the rear side.

**Patentansprüche**

**1.** Schalttafel vom Leistungsschaltertyp umfassend ein Gehäuse (1) mit darin untergebrachten mehrphasigen stromversorgungsseitigen Leitern (16A, 16B, 16C) und lastseitigen Leitern (17A, 17B, 17C), einen Unterbrecher (7), der zur Unterbringung im Gehäuse durch eine Einführöffnung (1A) einführbar ist, mehrphasige Unterbrecherteile (9A, 9B, 9C), die im Unterbrecher vorgesehen sind, stromversorgungsseitige Kontaktglieder (11A, 11B, 11C), die an den Unterbrecherteilen (9A, 9B, 9C) vorgesehen sind, um jeweils mit den stromversorgungsseitigen Leitern (16A, 16B, 16C) elektrisch verbunden zu werden, und lastseitige Kontaktglieder (12A, 12B, 12C), die an den Unterbrecherteilen (9A, 9B, 9C) vorgesehen sind, um jeweils mit den lastseitigen Leitern (17A, 17B, 17C) elektrisch verbunden zu werden, wobei die mehrphasigen Unterbrecherteile (9A, 9B, 9C) in der Tiefenrichtung (A) des Gehäuses (1) aufgereiht sind, dadurch gekennzeichnet, daß die Positionen (UA, UB, UC), an denen die stromversorgungsseitigen Kontaktglieder (11A, 11B, 11C) mit den entsprechenden stromversorgungsseitigen Leitern (16A, 16B, 16C) in elektrischen Kontakt gebracht werden und die Positionen (LA, LB, LC), an denen die lastseitigen Kontaktglieder (12A, 12B, 12C) mit den entsprechenden lastseitigen Leitern (17A, 17B, 17C) in elektrischen Kontakt gebracht werden, in einer Richtung (B) quer zur Aufreihungsrichtung (A) der mehrphasigen Unterbrecherteile (9A, 9B, 9C) und quer zur Längsrichtung der mehrphasigen Unterbrecherteile (9A, 9B, 9C) in relativ versetzter Anordnung aufgereiht sind.

**2.** Schalttafel nach Anspruch 1, dadurch gekennzeichnet, daß die Längen der Glieder (14), welche die mehreren Sätze von Kontaktpositionen in Richtung (B) quer zur Aufreihungsrichtung (A) der mehrphasigen Unterbrecherteile (9A, 9B, 9C) bereitstellen, von der Einführungsöffnung (1A) des Gehäuses (1) aus in der Tiefenrichtung (A) des Gehäuses (1) progressiv zunehmen.

**3.** Schalttafel nach Anspruch 1, dadurch gekennzeichnet, daß das stromversorgungsseitige Kontaktglied (11A) einer Phase, die mit dem stromversorgungsseitigen Leiter (16A) der gleichen Phase an einer der mehreren Sätze von Kontaktpositionen, die in Richtung (B) quer zur Aufreihungsrichtung der mehrphasigen Unterbrecherteile (9A, 9B, 9C) angeordnet sind, in elektrischen Kontakt gebracht werden, auf der anderen Seite der stromversorgungsseitigen Kontaktglieder (11B, 11C) der anderen Phasen angeordnet ist.

**4.** Schalttafel nach Anspruch 1, dadurch gekennzeichnet, daß die Abstände zwischen den Kontaktpositionen der stromversorgungsseitigen Kontaktglieder (11) und der lastseitigen Kontaktglieder (12) derartig gewählt sind, daß sie von dem auf der Vorderseite angeordneten Unterbrecherteil (9A) zum rückseitigen Unterbrecherteil (9C) hin progressiv schmäler werden ($H_1 > H_2 > H_3$).

**Revendications**

**1.** Panneau de distribution du type recevant un coupe-circuit, comprenant un boîtier (1) possédant des conducteurs (16A, 16B, 16C) situés du côté alimentation en énergie polyphasée et des conducteurs (17A, 17B, 17C) situés du côté charge et disposés à l'intérieur du boîtier, un coupe-circuit (7) inséré par une ouverture d'insertion (1A) de manière à être logé dans ledit boîtier, des éléments de coupure polyphasés (9A, 9B, 9C) prévus dans ledit coupe-circuit, des éléments de contact (11A, 11B, 11C) situés du côté alimentation en énergie et prévus sur lesdits éléments de coupure (9A, 9B, 9C) de manière à être raccordés électriquement respectivement auxdits conducteurs (16A, 16B, 16C) situés du côté alimentation en énergie, et des éléments de contact (12A, 12B, 12C) situés du côté charge et prévus sur lesdits éléments de coupure (9A, 9B, 9C) de manière à être connectés électriquement respectivement auxdits conducteurs (17A, 17B, 17C) situés du côté charge, et dans lequel lesdits éléments de coupure polyphasés (9A, 9B, 9C) sont disposés en rangée dans la direction de la profondeur (A) dudit boitier (1), caractérisé en ce que les positions (UA, UB, UC), dans lesquelles lesdits éléments de contact (11A, 11B, 11C) situés du côté alimentation en énergie sont amenés en contact électrique avec les conducteurs correspondants (16A, 16B, 16C) situés du côté alimentation en énergie, et les positions (LA, LB, LC), dans lesquelles lesdits éléments de contact (12A, 12B, 12C) situés du côté charge sont placés en contact électrique avec les conducteurs correspondants (17A, 17B, 17C) situés du côté charge, sont disposées avec un décalage réciproque dans une direction (B) transversale par rapport à la direction (A) de rangement desdits éléments de coupure polyphasés (9A, 9B, 9C), et transversale par rapport à la direction longitudinale desdits éléments de coupure polyphasés (9A, 9B, 9C).

2. Panneau de distribution selon la revendication 1, caractérisé en ce que les longueurs d'éléments (14) qui constituent plusieurs ensembles desdites positions de contact situées dans la direction (B) transversalement par rapport à la direction (A) de rangement desdits éléments de coupure polyphasés (9A, 9B, 9C) augmentent progressivement à partir de l'ouverture d'insertion (1A) dudit boîtier (1), dans la direction (A) de la profondeur dudit boîtier (1).

3. Panneau de distribution selon la revendication 1, caractérisé en ce que ledit élément de contact (11A) d'une phase, situé du côté alimentation en énergie et placé en contact électrique avec ledit conducteur (16A) de la même phase, situé du côté alimentation en énergie, dans une position faisant partie de la pluralité d'ensembles desdites positions de contact situées dans la direction (B) transversale par rapport à la direction de rangement desdits éléments de coupure polyphasés (9A, 9B, 9C) est disposé sur l'autre côté desdits éléments de contact (11B, 11C) des autres phases, qui sont situés du côté alimentation en énergie.

4. Panneau de distribution selon la revendication 1, caractérisé en ce que les distances entre les positions de contact desdits éléments de contact (11) situés du côté alimentation en énergie et desdits éléments de contact (12) situés du côté charge sont choisis de manière à diminuer progressivement ($H_1 > H_2 > H_3$) depuis ledit élément de coupure (9A) disposé sur le côté avant en direction dudit élément de coupure (9C) disposé sur le côté arrière.

# FIG. I

# FIG. 2A

# FIG. 2B

# FIG. 2C

# FIG. 3

# FIG. 4

# FIG.5